# EUROPEAN PATENT APPLICATION

(11) **EP 4 783 560 A1**
(43) Date of publication of application: **29.07.2026**
(21) Application number: 24878482.9
(22) Date of filing: 28.05.2024
(51) Int. Cl.: H04M 3/42, H04M 1/72454

(54) **INTERACTION METHOD FOR CALL INTERFACE, AND RELATED APPARATUS**

(30) Priority: 17.10.2023 CN 202311349159
(71) Applicant: HUAWEI TECHNOLOGIES CO., LTD., Shenzhen 518129 (CN)
(72) Inventor: DAI, Tianyao, Shenzhen, Guangdong 518129 (CN); ZHENG, Jiangzhen, Shenzhen, Guangdong 518129 (CN); WANG, Zongbo, Shenzhen, Guangdong 518129 (CN); WANG, Yu, Shenzhen, Guangdong 518129 (CN)
(74) Representative: Maiwald GmbH
(86) International application number: PCT/CN2024/095790
(87) International publication number: WO 2025/081829

(57) **Abstract**

An interaction method for a call interface is provided, applied to an electronic device equipped with an AI assistant and provided with a display. The method includes: detecting that an AI call mode is enabled, where the AI call mode is a mode in which the AI assistant is used to conduct a call with a caller; and detecting a first operation, where the first operation indicates to switch from the AI call mode to a manual call mode, and the manual call mode is a mode in which a user conducts the call with the caller. The method supports switching between a user call mode and the AI call mode, and supports interaction with the AI assistant through the interface in the AI call mode to indicate the AI assistant to better conduct the call with the caller, thereby improving user experience and work efficiency.

## Description

### TECHNICAL FIELD

This application relates to the field of terminal device technologies, and in particular, to an interaction method for a call interface and a related apparatus.

### BACKGROUND

With development of society and revolution in manufacturing technologies, the world is rapidly entering a digital intelligent society characterized by ubiquitous sensing, interconnection, and intelligence. Digitalization of electronic devices has gradually become a mainstream. Against the backdrop of the digital era, people have higher demands for efficient work and life. For example, in multitasking scenarios such as participating in an online meeting while receiving an important call, users can use AI assistants to answer calls and record important information during calls, thereby improving efficiency.

Currently, using AI assistants to answer calls has become a mainstream scenario. However, due to complexity of call scenarios and diversity of call types, the AI assistants struggle to effectively process complex and variable call scenarios. Therefore, a call method that supports interaction between a user and an AI assistant is essential.

### SUMMARY

This application provides an interaction method for a call interface, to help a user answer a call and generate a key information summary card, thereby improving user experience and work efficiency.

A first aspect of this application provides an interaction method for a call interface. The method is applied to an electronic device carrying an AI assistant application. The electronic device is not limited to an intelligent terminal electronic device such as a mobile phone, a computer, a tablet, or a watch. The method includes: detecting that an AI call mode is enabled, where the AI call mode is a mode in which the AI assistant is used to conduct a call with a caller; and detecting a first operation, where the first operation indicates to switch from the AI call mode to a manual call mode, and the manual call mode is a mode in which a user conducts the call with the caller.

In the method, the AI assistant is used to answer a call to help the user receive some key call information, and interaction in a call process is implemented through interaction between the AI call mode and a manual mode, thereby reducing incorrect response of the AI assistant to call content and resolving a problem that the AI assistant struggles to cope with complex call scenarios, so that user experience and work efficiency can be improved.

In a possible implementation, the method further includes: detecting input of a prompt, generating a call voice signal based on the prompt, and sending the call voice signal to the caller.

In this solution, the user may set response content and a response manner of the AI assistant based on the prompt popped up on the interface. In this way, the AI assistant can adjust a status and content in a timely manner according to requirements of actual scenarios, thereby providing better user experience.

In a possible implementation, the method further includes: displaying an information card and a summary card on the call interface, where the information card indicates a key content text in call information, and the summary card indicates a summarized content text in the call information.

In this solution, the information card and the summary card are displayed on the call interface to record content in the call process, thereby improving user experience and work efficiency.

In a possible implementation, the method further includes: displaying an AI assistant icon on the call interface, where the AI assistant icon is used to interact with the user to implement mode switching.

In this solution, an interface interaction scenario is provided. The user implements switching between the call modes by operating the AI assistant icon.

In a possible implementation, the prompt specifically includes a fixed recommendation word, and the fixed recommendation word includes a tone recommendation word and a control recommendation word; the tone recommendation word indicates a tone of an output voice text; and the control recommendation word is used to output a voice text to control progress and duration of a call.

In this solution, the prompt includes the tone recommendation word and the control recommendation word. The tone recommendation word may select a tone type such as a cute tone, a lively tone, a serious tone, a gentle tone, or an angry tone to help the AI assistant adjust the tone to adapt to current call context to better cope with complex scenarios to express emotions of the user. The control recommendation word is mainly used to control and remind call duration by selecting call phrasing.

In a possible implementation, the prompt specifically includes a real-time recommendation word, and the real-time recommendation word is text data generated based on real-time call content and is used to respond to the caller.

In this solution, the real-time recommendation word is provided. The real-time recommendation word is mainly some key information prompts that are generated based on call content of the caller and that are used to respond to the caller. For example, the caller asks which of Restaurant A or Restaurant B to go to, and options "Restaurant A" and "Restaurant B" may appear on the call interface, or the caller specifies the time for reserving a meeting room, and the call interface provides options based on selection provided by the user for selection. This manner enables the user to better participate in interaction in an AI call, which can better help the AI assistant better express thoughts and intentions of the user, thereby effectively improving user experience and work efficiency.

In a possible implementation, the prompt specifically includes a user input text, and the user input text is text data that is manually input by the user and is used to express intentions and thoughts of the user.

In this solution, a manner in which the user is allowed to manually input a text and the user is allowed to express thoughts in real time and interact with the caller is proposed, which can better help the AI assistant cope with complex scenarios, better express intentions of the user, and be more tactful and humble in some scenarios to better maintain interpersonal relationships.

In a possible implementation, the prompt specifically includes user input voice, and the method includes: detecting a second operation, where the second operation indicates to receive the user input voice; converting the user input voice into AI assistant voice; and sending the AI assistant voice to the caller.

In this solution, a solution of answering a call by the AI assistant is provided, so that voice is manually input to help the AI assistant better reply to the caller.

In a possible implementation, the method further includes: detecting a third operation, and adjusting a call voice rate of the AI assistant.

In this solution, a method for adjusting the call voice rate of the AI assistant is provided. The method can improve user experience of the AI assistant, so that the AI assistant can better simulate human behavior and linguistic rhythms.

In a possible implementation, the information card and the summary card are displayed on the call interface, the information card indicates the key content text in the call information, and the summary card indicates the summarized content text in the call information.

In a possible implementation, displaying the information card and the summary card on the call interface specifically includes: detecting an audio signal, and identifying information of a preset type in the audio signal to obtain the key content text and the summarized text; generating the information card based on the key content text; and generating the summary card based on the summarized text.

In this solution, the user may identify information such as key information and preset information based on audio information of the caller, extract important summary information based on the information, and generate the summary card; and may summarize information in call content to generate the summarized text for recording and reminding for the user.

In a possible implementation, the preset type in the audio signal includes, but is not limited to, a telephone number, an address, and a schedule.

In a possible implementation, the summarized text is text content that summarizes call content within preset duration.

In this solution, the AI assistant may generate the summarized text of the call content based on audio call content within the preset duration and a large language model.

A second aspect of this application provides an electronic device carrying an AI assistant, where the device includes: a detection module, configured to detect that an AI call mode is enabled, where the AI call mode is a mode in which the AI assistant is used to conduct a call with a caller; and the detection module is further configured to detect a first operation, where the first operation indicates to switch from the AI call mode to a manual call mode, and the manual call mode is a mode in which a user conducts the call with the caller.

In a possible implementation, the device further includes: an input module, configured to input a prompt, generate a call voice signal based on the prompt, and send the call voice signal to the caller.

In a possible implementation, the device further includes: a display module, configured to display an information card and a summary card, where the information card indicates a key content text in call information, and the summary card indicates a summarized content text in the call information.

In a possible implementation, the display module is further configured to display an AI assistant icon, where the AI assistant icon is used to interact with the user to implement mode switching.

In a possible implementation, the prompt specifically includes a fixed recommendation word, and the fixed recommendation word includes a tone recommendation word and a control recommendation word; the tone recommendation word indicates a tone of an output voice text; and the control recommendation word is used to output a voice text to control progress and duration of a call.

In a possible implementation, the prompt specifically includes a real-time recommendation word, and the real-time recommendation word is text data generated based on real-time call content and is used to respond to the caller.

In a possible implementation, the prompt specifically includes a user input text, and the user input text is text data that is manually input by the user and is used to express intentions and thoughts of the user.

In a possible implementation, the prompt specifically includes user input voice, and the method includes: detecting a second operation, where the second operation indicates to receive the user input voice; converting the user input voice into AI assistant voice; and sending the AI assistant voice to the caller.

In a possible implementation, the detection module is further configured to detect a third operation, where the third operation indicates to adjust a call voice rate of the AI assistant.

In a possible implementation, the display module is configured to display an information card and a summary card, where the information card indicates a key content text in call information, and the summary card indicates a summarized content text in the call information.

In a possible implementation, the device further includes a text generation module, the text generation module is configured to generate text data based on a detected audio signal, specifically including: The detection module detects the audio signal, and identifies information of a preset type in the audio signal to obtain the key content text and the summarized text. The text generation module generates the information card based on the key content text. The text generation module generates the summary card based on the summarized text.

In a possible implementation, the preset type in the audio signal includes, but is not limited to, a telephone number, an address, and a schedule.

In a possible implementation, the summarized text is text content that summarizes call content within preset duration.

A third aspect of this application provides an electronic device carrying an AI assistant. The electronic device may include a processor. The processor is coupled to a memory. The memory stores program instructions. When the program instructions stored in the memory are executed by the processor, the method according to any one of the first aspect or the implementations of the first aspect is implemented. For details of steps that are performed by the processor and that are in the possible implementations of the first aspect, refer to the first aspect. Details are not described herein again.

A fourth aspect of this application provides a computer-readable storage medium. The computer-readable storage medium stores a computer program. When the computer program is run on a computer, the computer is enabled to perform the method according to any one of the implementations of the first aspect.

A fifth aspect of this application provides a computer program product. When the computer program product is run on a computer, the computer is enabled to perform the method according to any one of the implementations of the first aspect.

For beneficial effects of the second aspect to the fifth aspect, refer to descriptions of the first aspect. Details are not described herein again.

### BRIEF DESCRIPTION OF DRAWINGS

FIG. 1 is a diagram of an architecture of an application scenario according to an embodiment of this application;
FIGS. 2A-2C are diagrams of call answer interfaces according to an embodiment of this application, where FIGS. 2A and 2B are diagrams of call application interfaces for manual answering, and FIG. 2C is a diagram of a call application interface for AI answering;
FIGS. 3A to 3C are diagrams of enabling an AI call mode according to an embodiment of this application;
FIGS. 4A and 4B are diagrams of generating and entering a call voice signal based on a prompt according to an embodiment of this application, where FIGS. 4A and 4B show two different display manners;
FIG. 5 is a diagram of a call interface obtained after a virtual keyboard is activated according to an embodiment of this application;
FIGS. 6A to 6C are diagrams of call interfaces obtained after a virtual keyboard is activated according to an embodiment of this application;
FIG. 7 is a diagram of generating a summary card according to an embodiment of this application;
FIGS. 8A and 8B are diagrams of entering a call card interface from an answer interface according to an embodiment of this application; and
FIG. 9 is a diagram of an electronic device 100 carrying an AI assistant according to an embodiment of this application.

### DESCRIPTION OF EMBODIMENTS

To make the objectives, technical solutions, and advantages of this application clearer and more comprehensible, the following describes embodiments of this application with reference to the accompanying drawings. It is clear that the described embodiments are merely a part but not all of embodiments of this application. A person of ordinary skill in the art may learn that, as a new application scenario emerges, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the descriptions termed in such a manner are interchangeable in proper cases so that embodiments can be implemented in another order than the order illustrated or described in this application. In addition, the terms "include", "have", and any variants thereof are intended to cover a non-exclusive inclusion. For example, a process, a method, a system, a product, or a device including a series of steps or modules is not necessarily limited to those clearly listed steps or modules, but may include other steps or modules that are not clearly listed or are inherent to the process, the method, the product, or the device. Names or numbers of steps in this application do not mean that the steps in the method procedure need to be performed in a time/logical sequence indicated by the names or numbers. An execution order of the steps in the procedure that have been named or numbered can be changed based on a technical objective to be achieved, provided that same or similar technical effects can be achieved.

Unit division in this application is logical division and may be other division during actual implementation. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. Some or all of the units may be selected according to actual requirements to achieve the objectives of the solutions of this application.

For ease of understanding, the following first describes some technical terms used in embodiments of this application.

### (1) AI assistant

An AI Assistant is an artificial intelligence assistant that provides functions such as an AI Q&A assistant, an AI drawing assistant, an AI analysis assistant, and an intelligent voice translation robot, and provides an efficient and convenient artificial intelligence system platform for users.

### (2) Information card

Information cards may be classified in various ways. For example, for WeChat that is instant messaging information software, an unread message may be classified into a text message, a picture message, a video message, a voice message, and a voice call/video call message based on content; and may be classified into a personal message and a group message based on an attribute of a sending object. These different types can all be used as information card categories.

### (3) Large language model

Large language models are one of the applications of deep learning, especially in the natural language processing (NLP) field. Large language models need to be trained on a large amount of text data to learn various patterns and structures of languages. The goal of these models is to understand and generate human languages to enable effective dialog and answer various questions.

Currently, with advancement of technology and development of society, daily work often involves an overwhelming number of conference calls, and important calls are often missed due to sheer volume of tasks. To make people's lives more convenient and work more efficient, using AI assistants to answer calls has become an important approach. AI assistants can converse with callers using a preset tone and may generate call summary information for key information in conversation content, allowing users to clearly understand call content even when they are unavailable.

This method can effectively prevent missing of important calls by using an AI assistant to answer calls. Through support for switching between an AI mode and a manual mode, a problem that the AI assistant struggles to cope with complex scenarios and process complex call content can be effectively avoided. Additionally, the method allows a user to guide an AI call tone and call content in an AI call mode, enabling the AI assistant to better process call content and respond to questions in calls according to intentions of the user. In addition, summary information generated based on call audio data by using a large language model may be further used to obtain key information and summarized information of a conference call to record call content within preset call duration, so that work efficiency and user experience can be effectively improved.

In view of this, embodiments of this application provide an interaction method for a call interface. Based on a connection setting of an important call, an AI assistant is allowed to answer an important incoming call. If an incoming call rings for a period of time without being answered, the AI assistant automatically answers the call and generates a key information summary card based on call content. In addition, when the AI assistant is answering a call, a user can intervene at any time to interact with the AI assistant to guide the AI assistant to better conduct the call. In addition, the user can disable an AI assistant function at any time in a call process and continue the call in a manual answering manner.

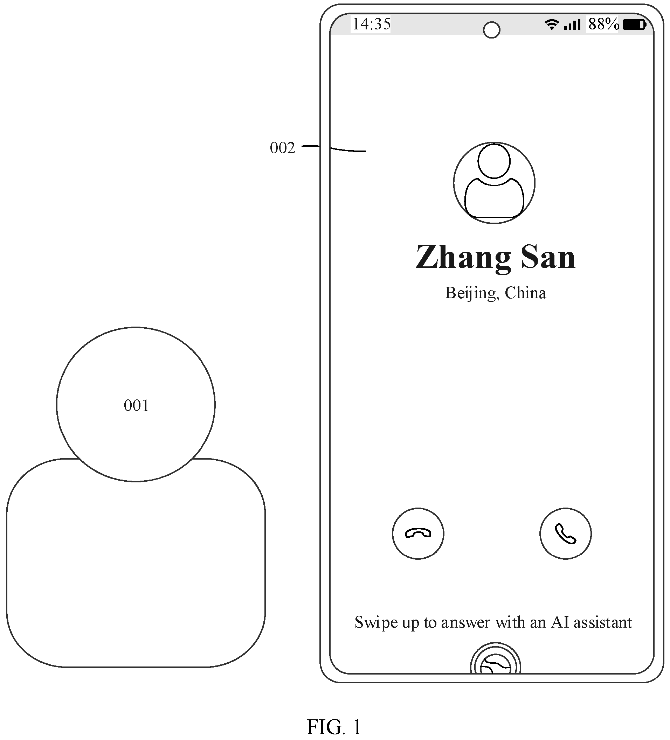

FIG. 1 is a diagram of an architecture of an application scenario according to an embodiment of this application. As shown in FIG. 1, the application scenario includes a user 001 and an electronic device 002. The electronic device 002 may be an intelligent terminal electronic device such as a mobile phone, a tablet, a notebook computer, or a watch. Specifically, the user 001 is usually an owner of the electronic device 002, using the electronic device 002 to access network information and communicate with others. The electronic device 002 is equipped with an operating system, and is installed with multiple types of software such as a call application, SMS, instant messaging software, and an email application. The electronic device obtains a satellite/network call signal using a communication module such as an antenna, enables the call application, and displays a call interface.

In a possible implementation, the user 001 sets that an AI assistant on the electronic device 002 automatically answers a call after ringing for a period of time (the time may be preset, and it is assumed that the time is set to 40s). For example, it is assumed that when the user does not answer the call after the electronic device rings for 40 seconds, the AI assistant automatically answers the call.

In a possible implementation, the user 001 receives an incoming call from "Zhang San". In this case, an answer button and a hang-up button are displayed on an interface of the electronic device 002, an indicator "Swipe up to answer with AI assistant" is displayed at the bottom, and the AI assistant can answer the call by swiping up an AI assistant button.

In the foregoing solution, an example in which the AI assistant answers a call is used for description. In another implementation of this application, the AI assistant may further help answer a voice call or the like, and may perform voice communication with another user.

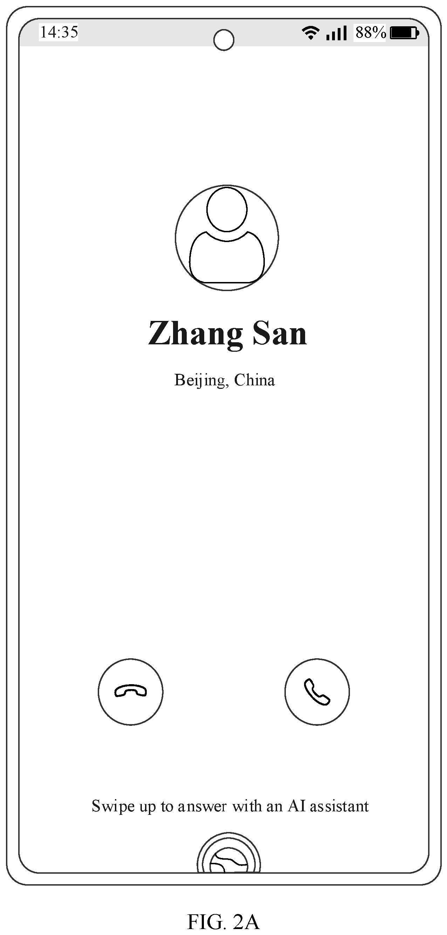

FIGS. 2A-2C are diagrams of call answer interfaces according to an embodiment of this application.

S101: Display an AI assistant icon on an incoming call interface.

An electronic device detects an incoming call signal, displays the incoming call interface, and displays the AI assistant icon on the incoming call interface. A call application is installed on the electronic device, and the call application may be a satellite call application built in a system or may be a network call application. The call application receives the incoming call signal through a communication module, for example, receives a satellite signal through an antenna. After receiving the satellite signal, the call application is started, and is displayed in the foreground to display a call interface.

In this solution, the incoming call interface includes a pre-answer interface and an answer interface. The pre-answer interface is a call application interface obtained before the user performs a preset operation, and an answer interface is an interface on which a call is connected after the user performs the preset operation. The preset operation is an operation that is of answering a call and that is defined by a system, for example, dragging an answer button using a gesture to answer the call.

The AI assistant icon is displayed on both the pre-answer interface and the answer interface. In this solution, the preset operation may alternatively be an interaction operation with the AI assistant, for example, dragging an AI assistant icon to move or performing voice input to interact with the AI assistant.

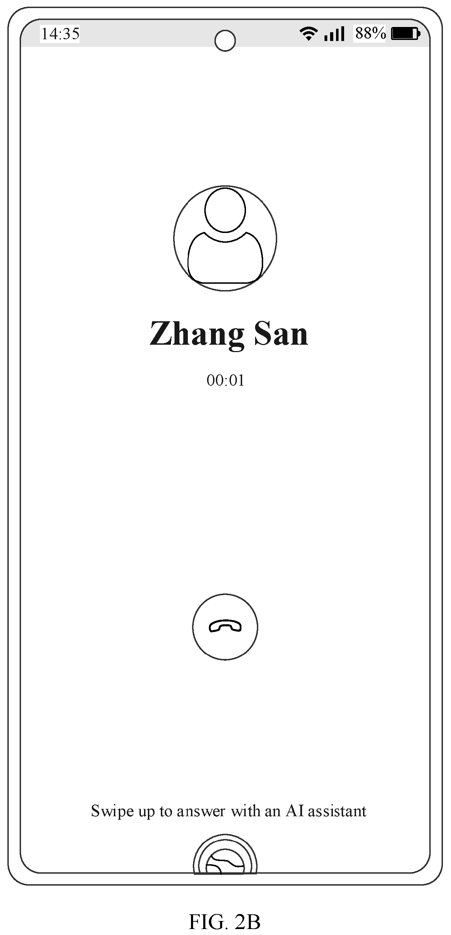

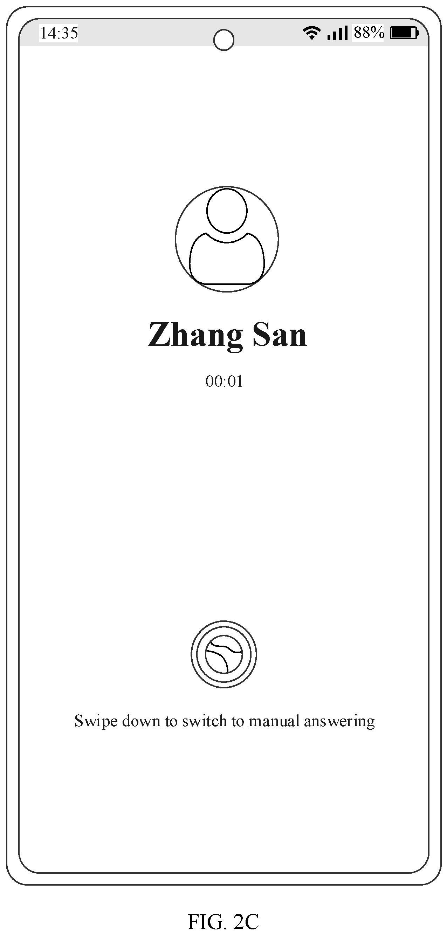

For example, FIGS. 2A-2C show pre-answer interfaces and an answer interface. FIGS. 2A and 2B are diagrams of call application interfaces for manual answering, and FIG. 2C is a diagram of a call application interface for AI answering. FIG. 2A is a pre-answer interface, and FIGS. 2B and 2C are answer interfaces. On the pre-answer interface in FIG. 2A, in addition to the answer button and a hang-up button, and on the answer interface in FIG. 2B, in addition to the hang-up button, the AI assistant icon is further displayed at the bottom of a screen. Before a user interacts with the AI assistant icon, only one part of the AI assistant icon is displayed on the screen, and the other part of the AI assistant icon is outside the screen. That is, the AI assistant is not completely displayed on the pre-answer interface. The user can drag the AI assistant icon to completely display the AI assistant icon on the screen. In FIG. 2C, in an AI answering mode, the AI assistant icon is completely displayed at a preset position on the screen, and an AI assistant application synchronously receives an audio signal. After understanding audio, the AI assistant application outputs AI voice by combining input of the user and an audio-to-text semantic understanding of the AI assistant, and sends the AI voice to a caller.

S102: Enable an AI call mode.

When it is detected that the AI assistant icon is moved from the bottom of the screen to the middle of the screen, the AI call mode is enabled, and call audio is synchronized to the AI assistant application. On the pre-answer interface, the user can interact with any icon of the answer, hang-up, and AI assistant icons to process the call. Interaction with the answer button and the hang-up button is consistent with that in the existing technologies. The user can drag the AI assistant icon, and enable the AI call mode (a counterpart to the AI call mode is a manual answering mode) by dragging the AI assistant icon from the bottom of the screen to a preset region in the middle of the screen or dragging the AI assistant icon by a distance greater than a preset value.

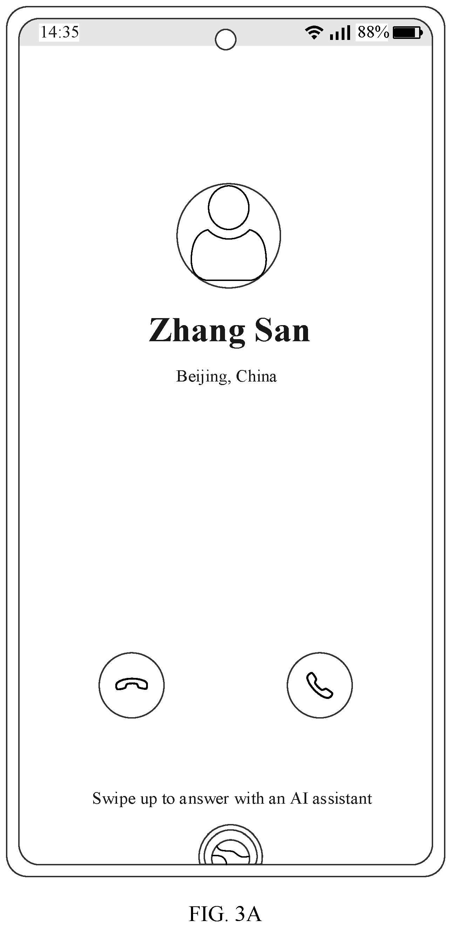

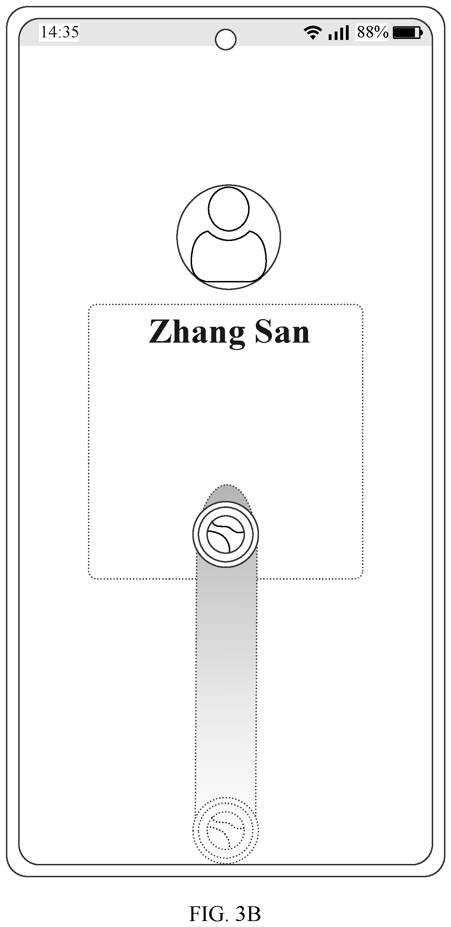

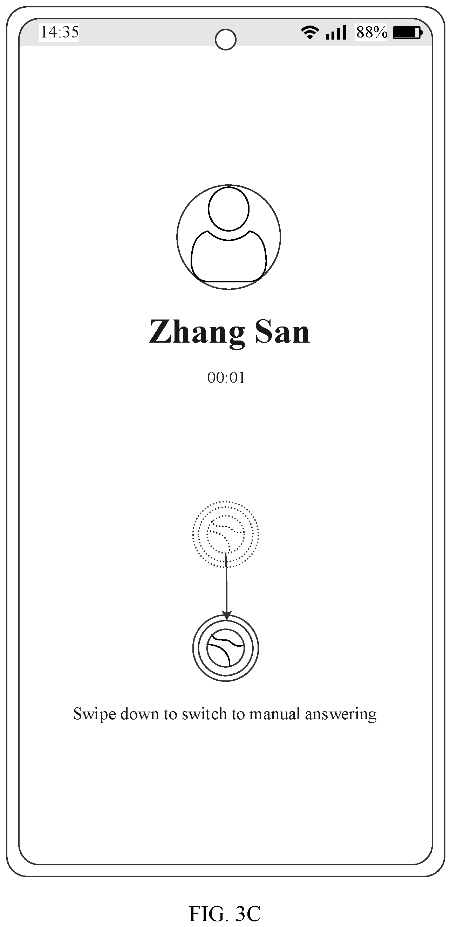

FIGS. 3A to 3C are diagrams of enabling an AI call mode according to an embodiment of this application. For example, FIGS. 3A to 3C show a process of enabling the AI call mode. After selecting the AI assistant icon, the user drags the AI assistant on the screen. When the AI assistant moves to the preset region (for example, a dashed-line box region in the middle figure) on the screen, if the gesture is released, it is considered that an AI call answering condition is met, and the AI call is enabled. After the release, the AI assistant icon moves from the position at which the gesture is released to a preset position on the answer interface.

In a possible implementation, in the AI call mode, in addition to sending received audio data to the call application, the electronic device further synchronously sends the received audio data to the AI assistant application. After the AI assistant invokes the language model to perform understanding based on the received audio data, the AI assistant outputs a reply text corresponding to audio, converts the reply text into a voice signal, and sends the voice signal to the call application, and then the call application sends the voice signal to the caller. In addition, in the AI call mode, when sending the voice signal to the caller, the call application also synchronously sends the voice signal to an audio output module for output, for example, directly plays the voice signal through a speaker, or sends the voice signal to a Bluetooth headset through a Bluetooth module. In this way, the user can obtain all conversations between the AI assistant and the caller in real time as a third party.

In a possible implementation, the input received by the electronic device is a call voice signal generated and entered based on a prompt. Specifically, input of the prompt is detected, a call voice signal is generated based on the prompt, and the call voice signal is sent to the caller. In an AI call answering mode, the user may input the prompt, and the AI assistant generates a reply text based on the prompt input by the user and understanding of the received audio information, converts the reply text into call voice, and sends the call voice to the call application. The call application then sends the call voice to the caller/the audio output module.

In a possible implementation, a manner of inputting the prompt may be a recommendation word selected by the user on the call interface, or may be an input phrase input by the user by invoking a virtual keyboard on the call interface. Specifically, after the AI call answering mode is enabled, the AI assistant may display a recommendation word on the call interface, and the user selects a recommendation word to influence a call phrase output by the AI. In addition, a virtual keyboard icon may be further displayed on the call interface in the AI call mode. The user taps the virtual keyboard icon, enables the virtual keyboard to perform input, and directly inputs a phrase as a prompt.

In this solution, there are also the following manners for generating a recommendation word:

The recommendation word may include a fixed recommendation word and a real-time recommendation word. The fixed recommendation word is a fixed word applicable to all AI calls. The real-time recommendation word is generated after the AI assistant performs understanding based on a received voice signal, and is directly associated with an audio phrase of the caller. In other words, the real-time recommendation word is a recommendation word generated by performing real-time recognition based on current call content, and this type of recommendation word is generated for semantics of the current caller.

### (1) Fixed recommendation word

The fixed recommendation word includes a tone recommendation word and a process control recommendation word. The tone recommendation word is phrasing used to influence an output voice text. For example, when a formal tone and a lively tone are selected, an eventually output text varies. A text corresponding to a stern tone is more formal and written, and a text corresponding to the lively tone is more colloquial.

The process control recommendation word is used to control progress and duration of a call, including quickly ending a call and maintaining a call. For example, quick ending is selected, so that after completing/executing the current output, the AI assistant adds a phrase indicating to end the call soon to convey intent to end the call to the caller (instead of directly ending the call).

### (2) Real-time recommendation word

The real-time recommendation word may be generated by the AI assistant application based on the received audio signal, or may be generated by the AI assistant application based on expected reply content output for the received audio signal. The expected reply content is a text that is generated by the AI assistant based on the received audio signal and that has not been sent to the call application.

Specifically, the real-time recommendation word may be a keyword extracted from an obtained text after voice-to-text is performed on the received audio signal. For example, a text obtained through voice conversion is "Where should we eat tonight, Restaurant A or Restaurant B?" The keywords "Restaurant A" and "Restaurant B" are extracted from the text. In addition, a derivative word of a keyword may be further obtained based on the keyword and context according to a preset rule. For example, the foregoing voice is an interrogative sentence, and two choices are provided: Restaurant A and Restaurant B. Apart from selecting an answer from Restaurant A and Restaurant B, the peer party may be asked to decide. Therefore, the derivative word "Decide by peer party" may be obtained.

Alternatively, the real-time recommendation word may be a keyword extracted from the expected reply content, or a derivative word obtained according to a preset rule from the keyword extracted from the expected reply content. For example, a text obtained through voice conversion is "Want to go for dinner tonight?" Apart from reply words "OK" and "No", the AI may output "Maybe later". Therefore, a derivative word "Maybe later" is obtained.

### (3) Display of recommendation words

Recommendation words can be displayed by recommendation word type or by individual recommendation words. Each recommendation word corresponds to one bubble, and is displayed in a preset region on the call interface. A recommendation word bubble may be displayed statically, or may be displayed in a dynamic effect manner. For example, the recommendation word bubble may move in a preset region, for example, a dynamic effect of moving a bubble from the inside of the screen to the outside of the screen is displayed, and an individual recommendation word bubble may be displayed for a period of time and disappear.

All recommendation words may be displayed on the call interface. Alternatively, only a recommendation word of a preset type may be displayed on the call interface, and a recommendation word of a non-preset type is folded. The recommendation word of the type is displayed on the call interface in an expanded manner only after the user performs a preset operation.

Real-time recommendation words directly influence an output result of an AI call. The tone recommendation words only modify the output result. The process control recommendation words are invoked only when users have requirements. Therefore, all real-time recommendation words are displayed on the call interface in the form of recommendation word bubbles. Two type controls are displayed only for the tone recommendation words and the process control recommendation words. When a type control is clicked, a recommendation word of the type is displayed on the call interface.

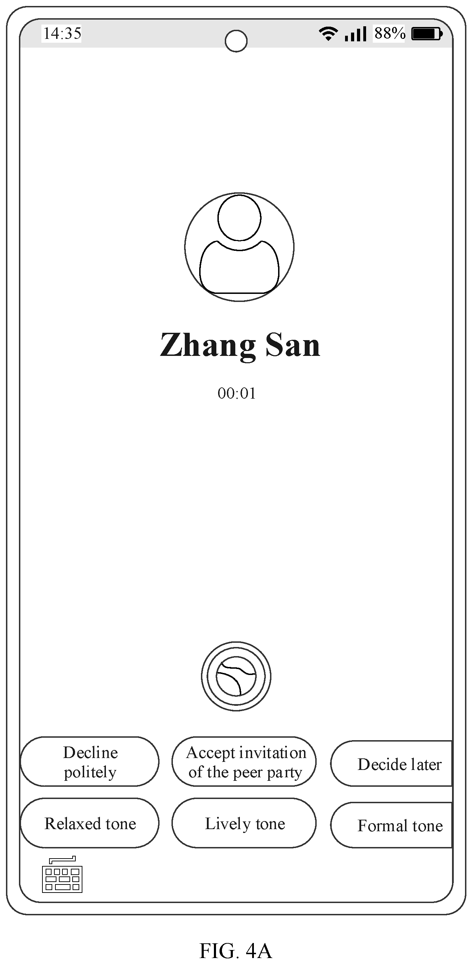

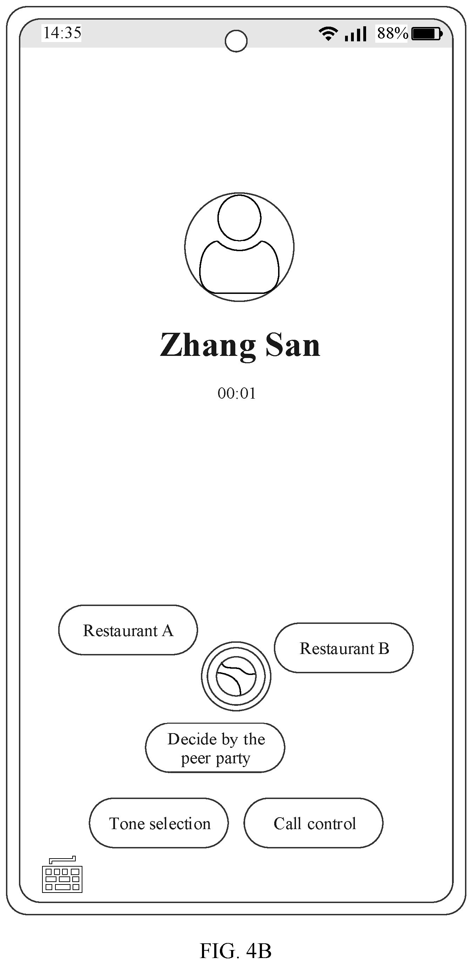

FIGS. 4A and 4B are diagrams of generating and entering a call voice signal based on a prompt according to an embodiment of this application. For example, FIGS. 4A and 4B show two different display manners. In FIG. 4A, two lines of recommendation words are displayed in a static display manner. One line of real-time recommendation words such as "Decline politely", "Accept invitation of peer party", and "Decide later" are displayed. These real-time recommendation words are related to current call content and need to be recommended in real time based on the current call content. One line of fixed recommendation words is, for example, "Relaxed tone", "Lively tone", and "Formal tone". This type is used to provide guidance and suggestions on a response tone of the AI assistant. Instead of being folded, all types of recommendation words are directly displayed in recommendation word bubbles (limited by a screen area, some bubbles are displayed outside the screen). More recommendation word bubbles by swiping left or right. In FIG. 4B, the real-time recommendation words are displayed around the AI assistant icon, with the positions changing dynamically with time. A dynamic effect is configured (for example, a bubble moves from the inside of the screen to the outside of the screen and gradually appears, and transparency is continuously reduced). The fixed recommendation words are displayed only at fixed positions: "tone selection" and "call control". A corresponding classification control is typed, and the recommendation words of this type are displayed on the call interface in a manner of a recommendation word bubble. For a displayed result, refer to the fixed recommendation word in FIG. 4A.

In an implementation, if none of displayed recommendation word meets a requirement of the user, the user may tap a virtual keyboard icon at a lower left corner to activate a virtual keyboard to manually input a phrase as the recommendation word.

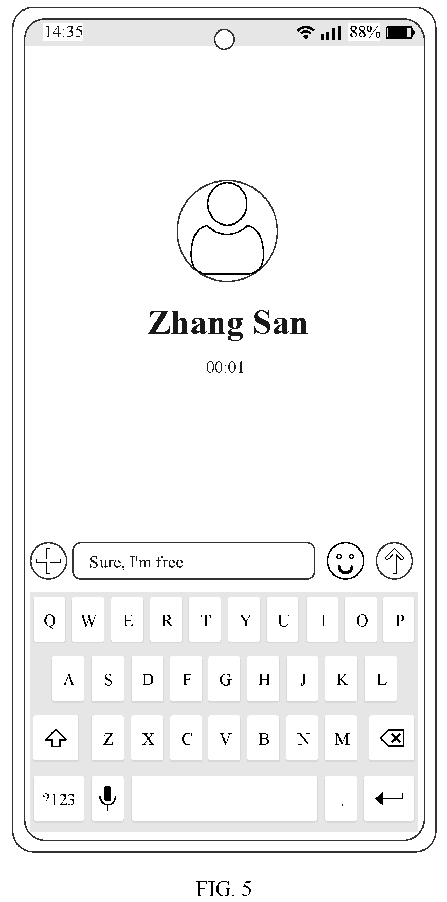

FIG. 5 is a diagram of a call interface obtained after a virtual keyboard is activated according to an embodiment of this application. For example, as shown in FIG. 5, after the user inputs a customized text and taps "Send", the virtual keyboard transfers the text input by the user to the AI assistant application. After receiving the input text, the AI assistant application generates a reply text by using the input text as a recommendation word. For example, the input text is directly used as the reply text.

After receiving the recommendation word, the AI assistant application inputs, based on the recommendation word and the text obtained by converting received audio, the recommendation word into a built-in/cloud language model to obtain a reply text, converts the reply text into audio, and outputs the audio to the call application.

When the user selects a tone recommendation word, during conversion of the reply text into audio, different voices may be further selected based on the tone recommendation word to synthesize audio. A correspondence between a tone recommendation word and a voice may be predefined.

For example, different tone recommendation words may correspond to different voice models, and a corresponding voice model is selected based on a tone recommendation word; or different tone recommendation words correspond to different voice tags, and a voice model is selected based on a tag. It may be understood that, for sound uniformity of output audio, for different voice models, voice models of different tones may be obtained through fine tuning based on a same reference voice.

When sending the received audio, the call application also synchronously invokes the audio output module to play the received audio. In this way, the user can receive a voice conversation between the AI assistant and a caller in real time.

On an AI call answer interface, in addition to interaction of recommendation words, the following interaction may also be included:
1. Touch and hold the AI assistant to send voice: This can be implemented in two ways. One is to touch and hold the AI assistant to receive a voice signal and send the voice signal to the call application, and the call application then sends the voice signal to a peer end. The other is to touch and hold the AI assistant to interrupt the AI call mode and temporarily switch to the manual answering mode. The call application directly receives and sends voice of the user. When it is detected that a touch-and-hold gesture is released, the AI call mode is resumed.
2. Drag the AI assistant to adjust a voice rate of the AI assistant by controlling a movement direction and distance. For example, the AI assistant is dragged to the left or right to adjust the voice rate. Certainly, the AI assistant may alternatively be dragged to move up or down. The voice rate may be adjusted by directly dragging the AI assistant. Alternatively, a voice rate adjustment function is activated through a preset gesture (for example, touch-and-hold duration exceeds a preset value), and then the AI assistant is dragged to adjust the voice rate.

In a possible implementation, the electronic device may switch from the AI call mode to the manual answering mode. Specifically, it is detected that the AI assistant icon moves from the middle of the screen to the bottom of the screen, and the electronic device is switched from the AI call mode to the manual answering mode. In an AI call process, the user may move the AI assistant icon to the bottom of the screen to switch from the AI call mode to the manual answering mode. Specifically, if the electronic device detects movement of the AI assistant icon again, the electronic device obtains a position of the AI assistant icon in real time based on an operation gesture. If at least a part of the AI assistant icon falls in a preset region (for example, outside a screen display region), the electronic device ends the AI call mode, and the call application no longer sends the audio data to the AI assistant application, instead switches to the manual answering mode, and outputs the audio data only through the audio output module.

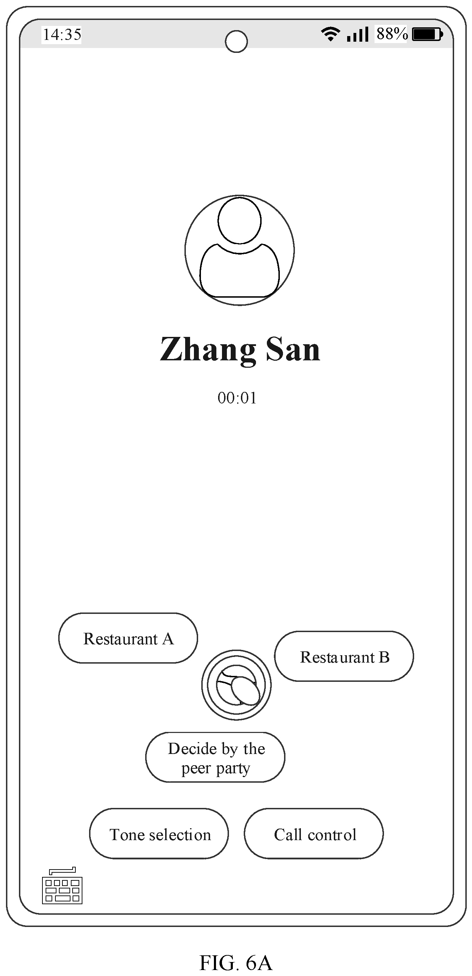

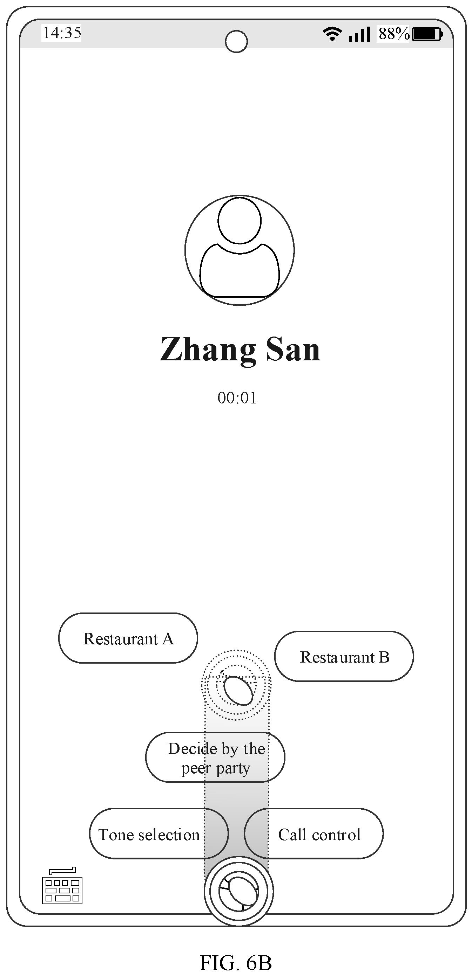

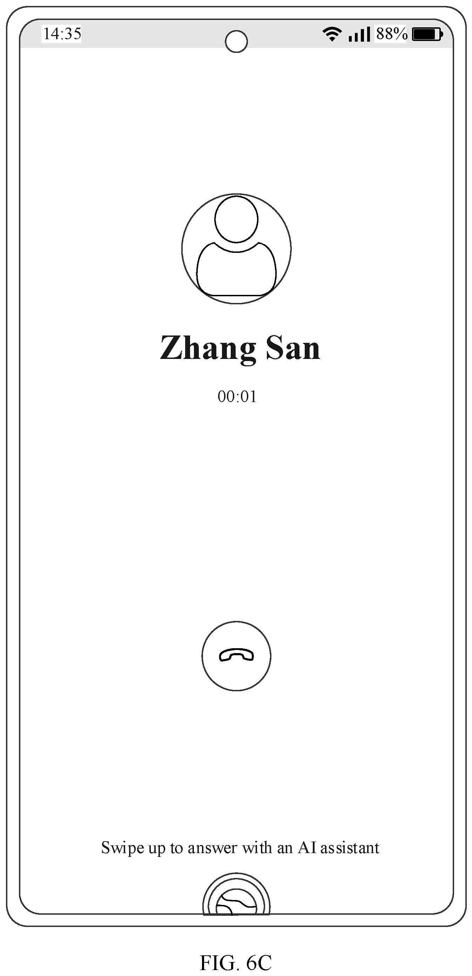

FIGS. 6A to 6C are diagrams of call interfaces obtained after a virtual keyboard is activated according to an embodiment of this application. For example, FIGS. 6A to 6C are diagrams of an interaction process of switching from the AI call mode to the manual answering mode. After the AI assistant icon is selected, the AI assistant icon is dragged downward to move at least a part of the AI assistant icon outside the screen display region to switch to the manual answering mode.

In a possible implementation, the AI assistant application may further generate a summary card and an information card in a call process, where the summary card is used to record key information in the call process, and the information card is used to summarize call information in the call process.

In a possible implementation, the electronic device may generate the summary card. Specifically, an answer interface is displayed. The AI assistant application obtains an audio signal of a caller in real time, identifies information of a preset type in the audio signal to obtain a key content text, and generates a summarized text based on the audio signal. The call application generates an information card based on the key content text, generates a summary card based on the summarized text, and displays the summary card on the answer interface.

After a call is connected (in either an AI answering mode or the manual answering mode), the call application enters the answer interface. After entering the answer interface, the AI assistant application obtains, in real time, an audio signal received by the call application, and analyzes the audio signal to identify information (a key content text) of a preset type and obtain summarized information (summarized text) within a preset time. For example, after voice-to-text operation is performed on the audio signal, an obtained text is input into a large language model to obtain the key content text and the summarized text.

In this solution, the information of the preset type is a telephone number, an address, and a schedule. When it is identified that the audio includes the information of the preset type, the AI assistant application separately extracts the information of the preset type to obtain the key content text. Specifically, the large language model may be trained to have a capability of identifying telephone number formats of countries and a capability of identifying address descriptions, so that when a text is input into the large language model, text content that complies with the telephone number formats/address descriptions is extracted separately.

In an implementation, the AI assistant usually further has a summarization capability, and can summarize voice content of the caller to obtain the summarized text. The summarized text may be generated in a unit of time. For example, one summarized text is generated at an interval of a preset time (for example, one minute). Alternatively, audio phrase segmentation may be performed based on an audio pause time of the caller in the audio using a pause time that exceeds a preset time (for example, 5s), and the summarized text is generated based on the audio phrase. Certainly, the AI assistant may also generate the summarized text using a phrase as a unit after segmenting sentences. Alternatively, the AI assistant performs topic determining based on audio content, and generates the summarized text based on a topic.

In an implementation, the AI assistant application sends the extracted key content text and summarized text to the call application. After receiving the key content text and the summarized text, the call application generates different cards based on different content types, and displays the cards on the call interface. Specifically, an information card corresponding to the key content text is generated, and a summary card corresponding to the summarized text is generated, so that the information card and the summary card are displayed on the answer interface.

In an implementation, due to a limited screen area, content displayed on the answer interface is limited, and all summary cards and information cards cannot be displayed. The information cards generally have a small amount of content and important information, and the summary cards have relatively unimportant information. Therefore, only the information cards may be completely displayed, and the summary cards are displayed in a stacked manner. In the stacked summary cards, only the latest summary card is completely displayed.

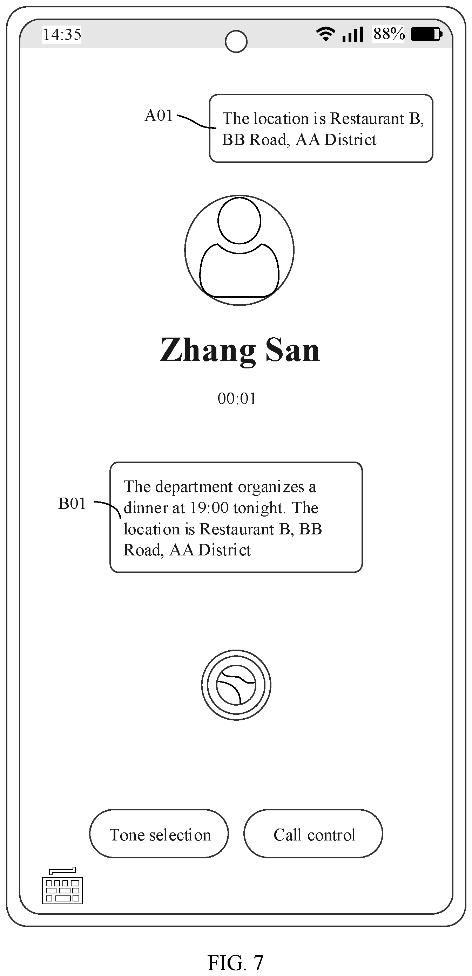

FIG. 7 is a diagram of generating a summary card according to an embodiment of this application. For example, FIG. 7 shows an answer interface. An information card A01 "The location is Restaurant B, BB Road, AA District" is displayed above a profile picture identifier of a caller. In a middle part of a screen, a summary card B01 "The department organizes a dinner at 19:00 tonight. The location is Restaurant B, BB Road, AA District" is displayed above an AI assistant icon.

In a possible implementation, an electronic device may further generate a summary card and an information card. Specifically, a preset operation is detected, a call card interface is entered, and all information cards and summary cards in a call process are displayed on a call card interface. If a user expects to view all the summary cards, both the information cards and the summary cards of the entire call process may be displayed using a preset operation. For example, the call card interface is entered by swiping rightward, and all the information cards and summary cards are displayed on the call card interface.

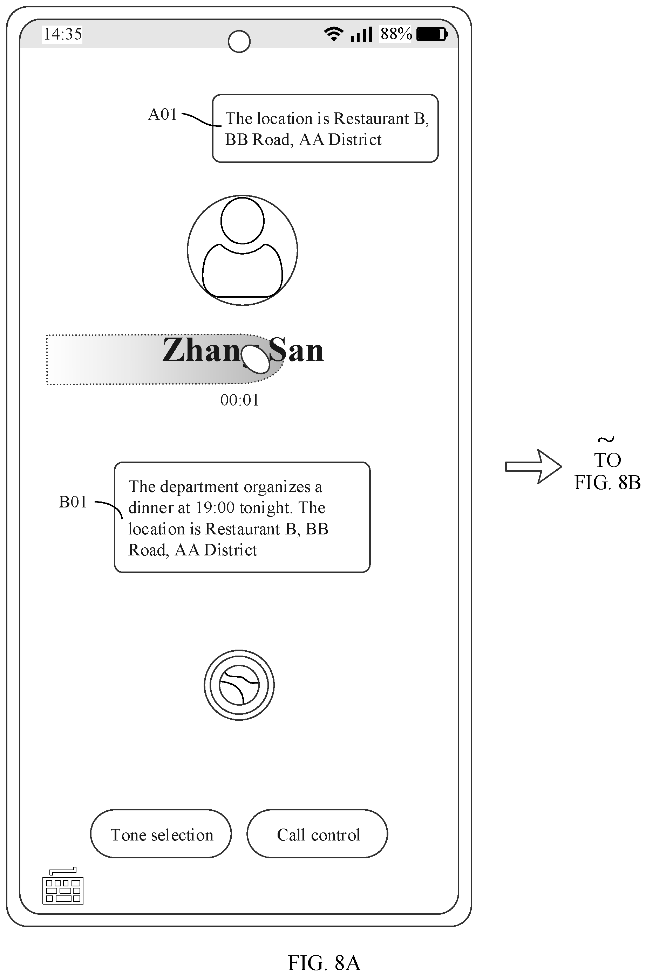

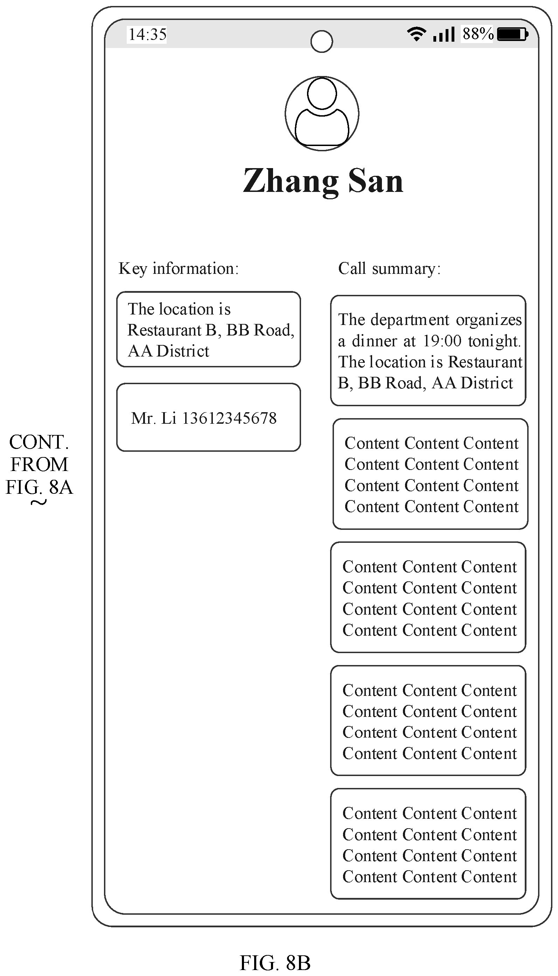

FIGS. 8A and 8B are diagrams of entering a call card interface from an answer interface according to an embodiment of this application. For example, FIGS. 8A and 8B are the diagrams of entering the call card interface from the answer interface. The call card interface is entered by swiping rightward from the left (or any position) of a screen on the answer interface by a preset distance. The call card interface displays all information cards and summary cards. Key information corresponds to the information cards, and call summaries correspond to the summary cards.

After the information cards and the summary cards are generated, even if a call is hung up, the information cards and the summary cards still exist until a call application is exited. After the call application is exited, the information cards/summary cards are destroyed. Certainly, a folder may alternatively be allocated to each call, and the information cards and the summary cards are stored in the folder.

The information cards and the summary cards may also support interaction: for example, touching and holding the information card/summary card to add the information card/summary card to Notes/Memo/Contacts. Specifically, after a card is touched and held, a secondary menu is correspondingly displayed at a card position, and content of the information card/content of the summary card is created as a note/contact based on a selected secondary menu option.

The foregoing mainly describes the solutions provided in embodiments of this application from the perspective of the methods. It may be understood that, to implement the foregoing functions, the electronic device includes a corresponding hardware structure and/or software module for performing each of the functions. A person of ordinary skill in the art should easily be aware that, in combination with the examples described in embodiments disclosed in this specification, modules, algorithms and steps may be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the electronic device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

The following describes in detail the electronic device in embodiments of this application.

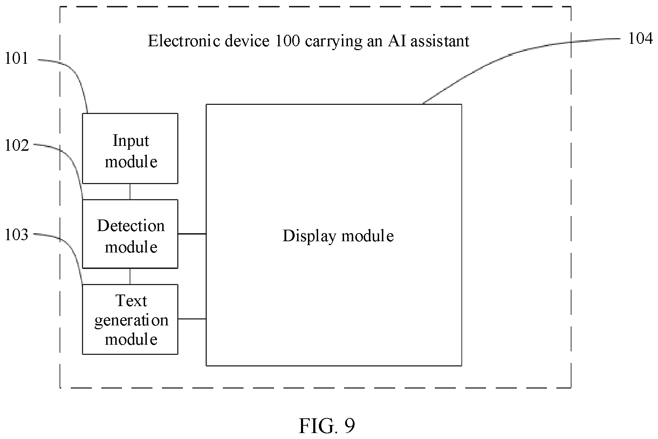

FIG. 9 is a diagram of an electronic device 100 carrying an AI assistant according to an embodiment of this application. The electronic device 100 includes an input module 101, a detection module 102, a text generation module 103, and a display module 104.

The detection module 101 is configured to detect that an AI call mode is enabled, where the AI call mode is a mode in which the AI assistant is used to conduct a call with a caller; and the detection module is further configured to detect a first operation, where the first operation indicates to switch from the AI call mode to a manual call mode, and the manual call mode is a mode in which a user conducts the call with the caller.

The input module 102 is configured to input a prompt, generate a call voice signal based on the prompt, and send the call voice signal to the caller.

The text generation module 103 is configured to generate a prompt. The text generation module 103 generates text information based on a received audio signal, identifies audio data of a preset type, and generates a summary text and a summarized text based on a large language model. The text generation module generates an information card based on the summary text. The text generation module generates a summary card based on the summarized text.

The display module 104 is configured to display the information card and the summary card, where the information card indicates a key content text in call information, and the summary card indicates a summarized content text in the call information. The display module is further configured to display an AI assistant icon, where the AI assistant icon is used to interact with the user to implement mode switching.

In a possible implementation, the detection module 102 detects that the AI call mode is enabled. In this case, an AI assistant performs a voice call with the caller. In a call process, the input module 101 allows the user to input text data, voice data, and content of a selection control according to an actual requirement and call content. The detection module 102 detects input data in real time, and adjusts call content and a call status of the AI assistant based on the input data, so that the user can interact with the AI assistant in real time in the call process between the AI and the caller. In addition, an AI assistant icon is displayed on a display interface, and a prompt is displayed in real time. The prompt may be dynamically generated based on audio data, or may be input by a user in real time, or may be of a fixed type. The foregoing prompt may control a call procedure and a call time by controlling a call response content, tone, and the like of the AI assistant.

In a possible implementation, the electronic device supports switching between call modes using the AI assistant icon, for example, switching from the AI call mode to the manual call mode, or switching from the manual call mode to the AI call mode.

The electronic device is generally a device carrying an AI assistant, supports the AI assistant in answering a call, and allows the user to interact with the AI assistant in the AI call mode, so that it is ensured that the AI assistant conducts the call based on intentions of the user, and quality of the call can be further effectively ensured. In addition, the electronic device may further generate a corresponding summary text and a corresponding summarized text based on the audio data of the call, thereby facilitating viewing and recording of conference content by the user.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (Solid-State Drive, SSD)), or the like.

## Claims

1. An interaction method for a call interface, applied to an electronic device carrying an AI assistant application, and comprising:
detecting that an AI call mode is enabled, wherein the AI call mode is a mode in which the AI assistant is used to conduct a call with a caller; and
detecting a first operation, wherein the first operation indicates to switch from the AI call mode to a manual call mode, and the manual call mode is a mode in which a user conducts the call with the caller.

2. The method according to claim 1, wherein the method further comprises: detecting input of a prompt, generating a call voice signal based on the prompt, and sending the call voice signal to the caller.

3. The method according to claim 1, wherein the method further comprises:
displaying an information card and a summary card on the call interface, wherein the information card indicates a key content text in call information, and the summary card indicates a summarized content text in the call information.

4. The method according to any one of claims 1 to 3, wherein the method further comprises:
displaying an AI assistant icon on the call interface, wherein the AI assistant icon is used to interact with the user to implement mode switching.

5. The method according to claim 2, wherein the prompt specifically comprises a fixed recommendation word, and the fixed recommendation word comprises a tone recommendation word and a control recommendation word;
the tone recommendation word indicates a tone of an output voice text; and
the control recommendation word is used to output a voice text to control progress and duration of a call.

6. The method according to claim 2, wherein the prompt specifically comprises a real-time recommendation word, and the real-time recommendation word is text data generated based on real-time call content and is used to respond to the caller.

7. The method according to claim 2, wherein the prompt specifically comprises a user input text, and the user input text is text data that is manually input by the user and is used to express intentions and thoughts of the user.

8. The method according to claim 2, wherein the prompt specifically comprises user input voice, and the method comprises:
detecting a second operation, wherein the second operation indicates to receive the user input voice;
converting the user input voice into AI assistant voice; and
sending the AI assistant voice to the caller.

9. The method according to claim 1, wherein the method further comprises:
detecting a third operation, and adjusting a call voice rate of the AI assistant.

10. The method according to claim 3, wherein the information card and the summary card are displayed on the call interface, the information card indicates the key content text in the call information, and the summary card indicates the summarized content text in the call information.

11. The method according to claim 10, wherein displaying the information card and the summary card on the call interface specifically comprises:
detecting an audio signal, and identifying information of a preset type in the audio signal to obtain the key content text and a summarized text;
generating the information card based on the key content text; and
generating the summary card based on the summarized text.

12. The method according to claim 10, wherein the preset type in the audio signal comprises, but is not limited to, a telephone number, an address, and a schedule.

13. The method according to claim 10, wherein the summarized text is text content that summarizes call content within preset duration.

14. An electronic device carrying an AI assistant, wherein the device comprises:
a detection module, configured to detect that an AI call mode is enabled, wherein the AI call mode is a mode in which the AI assistant is used to conduct a call with a caller, wherein
the detection module is further configured to detect a first operation, wherein the first operation indicates to switch from the AI call mode to a manual call mode, and the manual call mode is a mode in which a user conducts the call with the caller.

15. The electronic device according to claim 14, wherein the device further comprises:
an input module, configured to input a prompt, generate a call voice signal based on the prompt, and send the call voice signal to the caller.

16. The electronic device according to claim 14, wherein the device further comprises:
a display module, configured to display an information card and a summary card, wherein the information card indicates a key content text in call information, and the summary card indicates a summarized content text in the call information.

17. The electronic device according to any one of claims 14 to 16, wherein the display module is further configured to display an AI assistant icon, wherein the AI assistant icon is used to interact with the user to implement mode switching.

18. The electronic device according to claim 15, wherein the prompt specifically comprises a fixed recommendation word, and the fixed recommendation word comprises a tone recommendation word and a control recommendation word;
the tone recommendation word indicates a tone of an output voice text; and
the control recommendation word is used to output a voice text to control progress and duration of a call.

19. The electronic device according to claim 15, wherein the prompt specifically comprises a real-time recommendation word, and the real-time recommendation word is text data generated based on real-time call content and is used to respond to the caller.

20. The electronic device according to claim 15, wherein the prompt specifically comprises a user input text, and the user input text is text data that is manually input by the user and is used to express intentions and thoughts of the user.

21. The electronic device according to claim 15, wherein the prompt specifically comprises user input voice, and the method comprises:
detecting a second operation, wherein the second operation indicates to receive the user input voice;
converting the user input voice into AI assistant voice; and
sending the AI assistant voice to the caller.

22. The electronic device according to claim 14, wherein the detection module is further configured to detect a third operation, and adjust a call voice rate of the AI assistant.

23. The electronic device according to claim 14, wherein the display module is configured to display an information card and a summary card, wherein the information card indicates a key content text in call information, and the summary card indicates a summarized content text in the call information.

24. The electronic device according to claim 23, wherein that the device further comprises a text generation module, configured to generate text information based on detected audio information specifically comprises:
detect the audio signal, and identifying information of a preset type in the audio signal to obtain the key content text and a summarized text, wherein
the text generation module generates the information card based on the key content text; and
the text generation module generates the summary card based on the summarized text.

25. The electronic device according to claim 23, wherein the preset type in the audio signal comprises, but is not limited to, a telephone number, an address, and a schedule.

26. The electronic device according to claim 23, wherein the summarized text is text content that summarizes call content within preset duration.

27. An electronic device carrying an AI assistant, comprising a memory and a processor, wherein the memory stores code, the processor is configured to execute the code, and when the code is executed, the apparatus performs the method according to any one of claims 1 to 13.

28. A computer storage medium, wherein the computer storage medium stores instructions, and when the instructions are executed by a computer, the computer is enabled to implement the method according to any one of claims 1 to 13.

29. A computer program product, wherein the computer program product stores instructions, and when the instructions are executed by a computer, the computer is enabled to implement the method according to any one of claims 1 to 13.
